# EUROPÄISCHE PATENTSCHRIFT

(11) **EP 2 678 188 B1**
(45) Veröffentlichungstag und Bekanntmachung des Hinweises auf die Patenterteilung: **26.10.2016**
(21) Anmeldenummer: 12700595.7
(22) Anmeldetag: 05.01.2012
(51) Int. Cl.: B60P 7/08

(54) **ZUG- ODER SPANNMITTEL, INSBESONDERE ZURRGURT**
TRACTION OR TENSIONING MEANS, IN PARTICULAR A LASHING STRAP
DISPOSITIF DE TRACTION OU DE TENSION, EN PARTICULIER SANGLE D'AMARRAGE

(30) Priorität: 25.02.2011 DE 102011012393
(43) Veröffentlichungstag der Anmeldung: 01.01.2014
(73) Patentinhaber: Carl Stahl Hebetechnik GmbH, 73079 Süßen (DE)
(72) Erfinder: BUNSE, Marko, 73035 Göppingen (DE); RUBE, Helmut, 73079 Süßen (DE)
(74) Vertreter: Bartels, Martin Erich Arthur
(86) Internationale Anmeldenummer: PCT/EP2012/000033
(87) Internationale Veröffentlichungsnummer: WO 2012/113490

(56) Entgegenhaltungen:
- WO-A1-2005/066061
- DE-A1-102005 059 913
- DE-A1-102006 029 090
- DE-U1- 8 102 337

## Beschreibung

Die Erfindung bezieht sich auf ein Zug- oder Spannmittel, insbesondere einen Zurrgurt, mit den Merkmalen im Oberbegriff von Anspruch 1.

Bei derartigen Zug- oder Spannmitteln, die im Betrieb hohen Zugbelastungen ausgesetzt sind, sind höchste Anforderungen an die Betriebssicherheit zu stellen. Dies gilt namentlich auch für Zurrgurte, wie sie für den Gütertransport durch Kraftfahrzeuge benutzt werden, um Transportgüter auf Ladeflächen zu sichern. Die Zurrgurte werden hierbei als an der Ladefläche verankerte Spannbänder eingesetzt, die mittels sogenannter Gurtratschen gespannt werden, wobei im betreffenden Gurtkörper hohe Zugspannungen erreicht werden. Um die Zulässigkeit für derartige Einsatzzwecke bei Kontrollen, beispielsweise bei Ladungskontrollen im Rahmen von Verkehrsüberwachungen, nachzuweisen, unterliegen derartige Zug- oder Spannmittel konkreten Normvorschriften, die auch eine Kennzeichnungspflicht in Form einer Etikettierung umfassen. Genauer gesagt, muss ein betreffender Gurt mit einem Etikett versehen sein, das, unter anderem, zumindest folgende Angaben enthalten muss: Nennlänge, Tragfähigkeit, Identifizierung des Herstellers, Werkstoff des Gurtkörpers, rückverfolgbarer Code, Nummer der entsprechenden Normvorschrift sowie Herstelldatum und Weiteres.

Angesichts der rauhen Einsatzbedingungen muss das Etikett am betreffenden Gurt in der Weise angebracht sein, dass es gegen ein Abreißen gesichert ist. Diesbezüglich ist es Stand der Technik, vgl. DE 299 08 324 U1, das Etikett in Form eines flachen Kunststoffgewebes an der Außenseite des Gurtkörpers von Zurrgurten aufzunähen oder aufzudrucken. Abgesehen davon, dass bei einem aufgenähten Etikett grundsätzlich keine Sicherheit gegen Abreißen gewährleistet ist, bietet diese Anbringung keinen Schutz gegen Beeinträchtigungen der Lesbarkeit des Etiketts durch Verschmutzung und/oder Abrieb der Beschriftung, was auch für eine aufgedruckte Etikettlösung gilt.

Die DE 10 2006 029 090 A1 beschreibt ein Zug- oder Spannmittel, insbesondere einen Zurrgurt, mit einem flachen, langgestreckten Gurtkörper und einem Etikett, das zumindest solche visuell erkennbaren Informationen enthält, deren Angabe gesetzlich vorgeschrieben ist, wobei für das lageveränderlich angeordnete Etikett eine Schutzhülle vorhanden ist, die zumindest einen Großteil des Etiketts unter Einfluss einer an ihm angreifenden Vorspannkraft in einer geschützten Ruheposition aufnimmt, aus der es gegen die Vorspannkraft in eine Ableseposition herausbewegbar ist.

Im Hinblick auf diese Problematik liegt der Erfindung die Aufgabe zugrunde, ein Zug- oder Spannmittel, insbesondere Zurrgurt, zur Verfügung zu stellen, das den Anforderungen an die Sicherheit der Etikettierung in besserem Maße gerecht wird.

Erfindungsgemäß ist diese Aufgabe durch ein Zug- oder Spannmittel gelöst, das die Merkmale des Patentanspruchs 1 in seiner Gesamtheit aufweist.

Demgemäß besteht eine Besonderheit der Erfindung darin, dass eine Anschlageinrichtung vorgesehen ist, die die Weglänge der Einziehbewegung des Etiketts in einen Aufnahmekanal derart begrenzt, dass bei der geschützten Ruheposition ein Endteil des Etiketts außerhalb einer Öffnung des Aufnahmekanals verbleibt. Dabei kann es sich um ein außerhalb des Markierungsbereiches des Etiketts befindliches Endteil handeln, das lediglich so groß bemessen ist, dass es als Griffstück benutzt werden kann, um das Etikett manuell für Kontrollzwecke aus dem Aufnahmekanal herauszuziehen.

Ferner ist vorgesehen, dass das Etikett lageveränderlich angeordnet ist und dass eine Schutzhülle vorhanden ist, die zumindest einen Großteil des Etiketts unter Einfluss einer an ihm angreifenden Vorspannkraft in einer geschützten Ruheposition aufnimmt, aus der das Etikett gegen die Vorspannkraft in eine Ableseposition herausbewegbar ist. Dadurch ist das Etikett, da es unter Einfluss der Vorspannkraft normalerweise in der Ruheposition verbleibt, aus der es lediglich für Kontrollzwecke herausbewegt wird, dauerhaft sowohl gegen Abreißen als auch gegen Beeinträchtigungen der Lesbarkeit bestmöglich geschützt.

Bei besonders vorteilhaften Ausführungsbeispielen ist die Schutzhülle zwischen Lagen des Gurtkörpers gebildet, die in einem sich an eine Endschlaufe anschließenden Längenabschnitt aneinanderliegend sind. In besonders vorteilhafter Weise bildet somit der Gurtkörper selbst die Schutzhülle, die aufgrund der robusten Beschaffenheit des Gurtkörpers bestmögliche Schutzwirkung bietet.

In besonders vorteilhafter Weise kann die Anordnung hierbei so getroffen sein, dass der Gurtkörper ein Kunststoffgewebeband, beispielsweise ein Polyester-Gewebe ist, wobei die aneinanderliegenden Lagen entlang beider Seitenränder miteinander verbunden, vorzugsweise vernäht sind, dergestalt, dass die so gebildete Schutzhülle zwischen den Verbindungsbereichen den sich in Längsrichtung erstreckenden Aufnahmekanal mit der am Ende des Aneinanderliegens der Lagen gebildeten Öffnung aufweist.

Für die Aufnahme in einem so gebildeten Aufnahmekanal ist vorzugsweise ein Etikett in Form eines flachen, flexiblen Kunststoffbandes vorgesehen, an dessen einem Ende ein im Aufnahmekanal verankertes, die Vorspannkraft erzeugendes Gummiband angreift, das das sich durch die Öffnung des Aufnahmekanals erstreckende Etikett in den Aufnahmekanal einzuziehen sucht.

Die Anschlageinrichtung kann eine im Aufnahmekanal festgelegte, flache Anschlagplatte aufweisen, die das sich im Aufnahmekanal in Längsrichtung erstreckende Gummiband übergreift, das an seinem vom Etikett entfernten Endbereich am Gurtkörper festgelegt ist und in seinem dehnbaren Längenbereich unterhalb der Anschlagplatte bewegbar ist.

Dabei kann die Anordnung mit Vorteil so getroffen sein, dass das Gummiband an seinem mit dem Etikett verbundenen Endbereich einen aus der Bandebene vorstehenden Anschlagkörper bildet, der durch Anlage an der Anschlagplatte die Einziehbewegung des Etiketts bei Erreichen der Ruheposition begrenzt.

Mit besonderem Vorteil kann die Anschlagplatte als zweites, im Aufnahmekanal befindliches Etikett ausgebildet sein. Der Normvorschrift des Vorhandenseins eines zweiten Etiketts kann damit, ohne dass ein zusätzliches Bauteil erforderlich ist, nachgekommen werden, indem die Anschlagplatte eine entsprechende Beschriftung erhält, wobei diese zweite Etikettierung innerhalb der Umhüllung dauerhaft gesichert ist.

Nachstehend ist die Erfindung anhand eines in der Zeichnung dargestellten Ausführungsbeispiels im Einzelnen erläutert. Es zeigen:
- Fig. 1: eine schematisch vereinfacht gezeichnete perspektivische Schrägansicht eines Endabschnitts eines Ausführungsbeispiels der Erfindung in Form eines Zurrgurtes;
- Fig. 2: eine Draufsicht eines Etiketts und eines daran angebrachten Gummibandes als Bestandteile des Ausführungsbeispiels von Fig. 1; und
- Fig. 3 und 4: schematisch vereinfacht gezeichnete perspektivische Schrägansichten des Ausführungsbeispiels, wobei die in Fig. 1 gezeigte, umgefaltete, obenliegende Lage des Gurtbandes weggelassen ist und das Etikett in der ausgezogenen Ableseposition (Fig. 3) bzw. in der eingezogenen Ruheposition (Fig. 4) sichtbar ist.

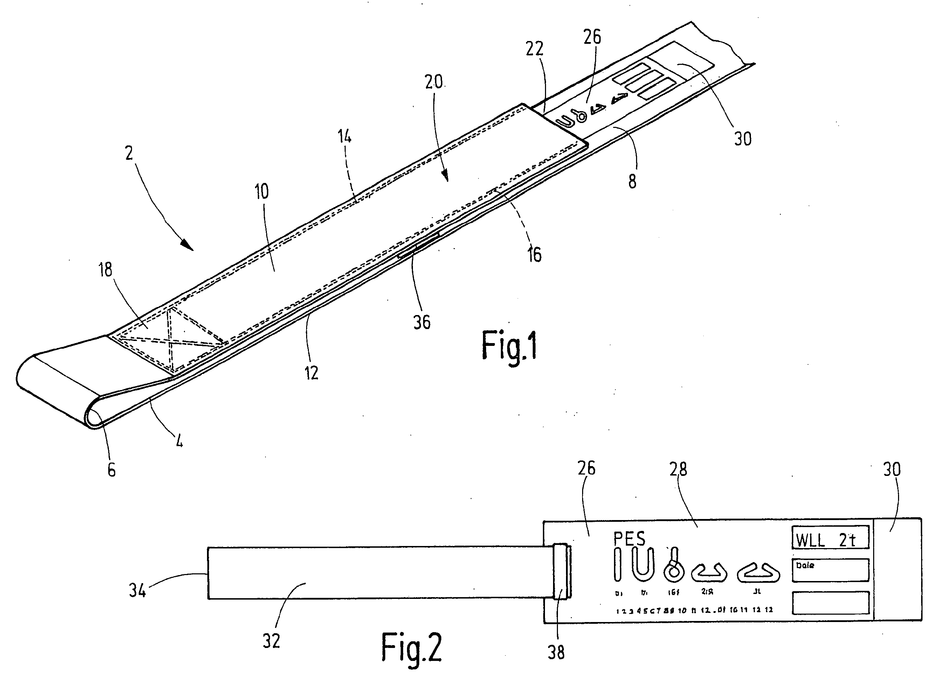

Nachstehend ist die Erfindung am Beispiel eines Zurrgurtes 2 erläutert, wie er beispielsweise zur Lagesicherung von Transportgütern auf Ladeflächen benutzt wird. In Fig. 1, 3 und 4 ist jeweils lediglich ein Teilabschnitt des Zurrgurtes 2 sichtbar, der sich an das geschlossene Ende 4 anschließt, wo eine Gurtschlaufe 6 gebildet ist. Bei Benutzung ist der Zurrgurt 2 am geschlossenen Ende 4 über einen die Schlaufe 6 durchgreifenden Haltebolzen, Verankerungshaken od. dgl. festgelegt. Der sich zum offenen Ende des Zurrgurtes 2 hin erstreckende Hauptteil des Gurtkörpers 8 ist in der abgebrochenen Zeichnung nicht sichtbar. Durch eine an diesem Längenabschnitt angreifende, ebenfalls nicht dargestellte Gurtratsche üblicher Bauweise kann der Zurrgurt 2 bei der Verwendung in geeigneter Weise gespannt werden.

Der Gurtkörper 8 ist ein Kunststoffgewebeband, beispielsweise ein Polyester-Gewebe. Die Gurtschlaufe 6 ist dadurch gebildet, dass in einem an die Schlaufe 6 angrenzenden Längenbereich, dessen Länge vorzugsweise dem 6-fachen bis 10-fachen der Breite des Gurtkörpers 8 entspricht, dieser so umgefaltet ist, dass in diesem Längenbereich zwei Gurtlagen 10 und 12 aneinanderliegen. Die Lagen 10, 12 sind fest miteinander verbunden. Bei dem hier vorliegenden Ausführungsbeispiel erfolgt die Verbindung durch Vernähen, wobei entlang der Seitenränder verlaufende Längsnähte 14 und 16 und in einem an die Schlaufe 6 angrenzenden Nahtbereich 18 zusätzliche Schräg- und Quernähte vorgesehen sind. Bei dieser Verbindung der Lagen 10 und 12 bilden diese die beiden Wände einer Schutzhülle 20 in Form eines Flachschlauches mit darin zwischen den Längsnähten 14 und 16 gebildetem Aufnahmekanal 24 mit einer am freien Ende der Lage 10 befindlichen Öffnung 22.

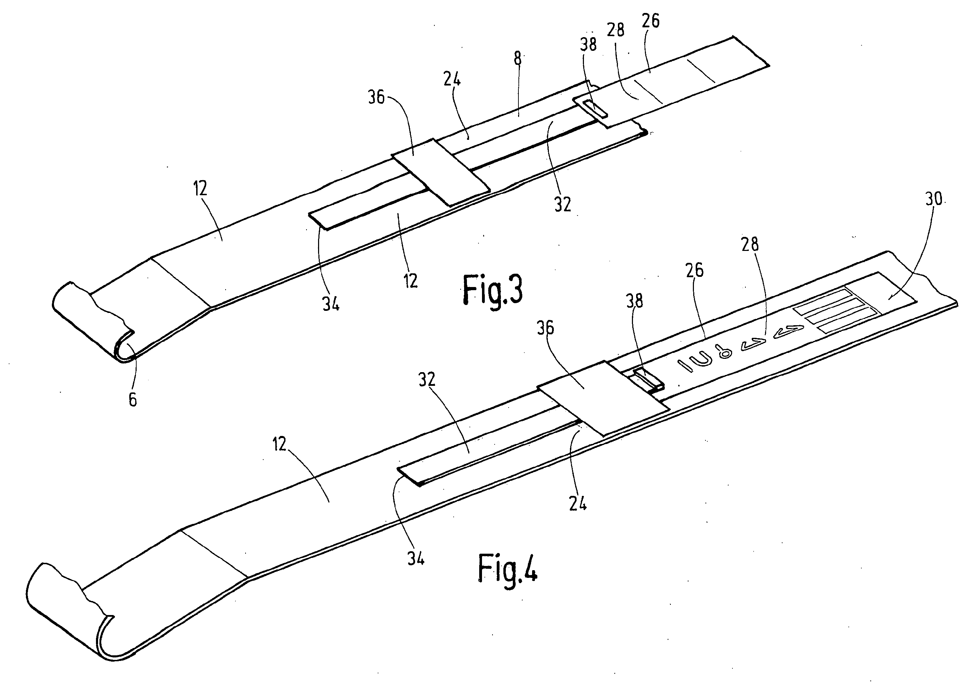

Die Fig. 3 und 4 zeigen bei weggelassener oberer Lage 10 das Innere dieses Aufnahmekanals 24, in dem ein Großteil eines Etiketts 26 in einer geschützten Ruheposition aufnehmbar ist. Dieses ist ein flexibles, dünnes Kunststoffband mit einem beschrifteten Hauptteil 28, der die gesetzlich vorgeschriebenen Informationen visuell erkennbar enthält, und einen Endteil 30. Wenn sich das Etikett 26 innerhalb des Aufnahmekanals 24 der Schutzhülle 20 in der geschützten Ruheposition befindet, befindet sich lediglich das Endteil 30 außerhalb der Öffnung 22, so dass das Etikett 26 an dem als Griffstück dienenden Endteil 30 ergriffen werden kann, um das Etikett 26 manuell aus der Ruheposition zu bewegen, d.h. in Längsrichtung des Aufnahmekanals 24 aus der Schutzhülle 20 herauszuziehen.

Das Etikett 26 ist für eine Rückzugsbewegung in die Ruheposition vorgespannt. Als die Vorspannkraft erzeugende Einrichtung ist ein Gummiband 32 vorgesehen, das an dem dem Endteil 30 entgegengesetzten Endbereich des Hauptteils 28 des Etiketts 26 angreift und seinerseits im Bereich seines freien Endes 34 an der Lage 12 des Gurtbandes 8 befestigt ist, beispielsweise angeklebt oder angenäht ist. In dem dehnbaren Längenbereich zwischen dem festgelegten Ende 34 und der Anbringstelle am Etikett 26 erstreckt sich das Gummiband 32 beweglich zwischen der Lage 12 und einer Anschlagplatte 36 hindurch, die lediglich randseitig mittels der Längsnähte 14, 16 axial festgelegt ist. Die vorzugsweise durch ein dünnes Kunststoffplättchen gebildete Anschlagplatte 36 wirkt mit einem Anschlagkörper 38 zusammen, der durch einen noppenartigen Vorsprung des Gummibandes 32 an dem mit dem Etikett 6 verbundenen Ende gebildet ist. Der Anschlagkörper 38 kann bevorzugt aber auch durch eine einfache Quernaht gebildet sein, die der Verbindung von Etikett 26 mit dem Gummiband 32 dient.

Die Fig. 1 verdeutlicht einen Zustand, bei dem das Etikett 26 teilweise aus der Ruheposition unter Dehnung des Gummibandes 32 herausgezogen ist. Die Fig. 3 zeigt einen ähnlichen Zustand, bei dem das Etikett 26 unter stärkerer Dehnung des Gummibandes 32 weiter, d.h. näherungsweise bis in die Ableseposition herausgezogen ist. Die Fig. 4 zeigt andererseits den Zustand, bei dem das Gummiband 32 das Etikett 26 in die Ruheposition eingezogen hat, wobei der Anschlagkörper 38 durch Anlage an der Anschlagplatte 26 die weitere Einziehbewegung beendet. Die Lageposition der Anschlagplatte 36 innerhalb des Aufnahmekanals 24 der Schutzhülle 20 ist so gewählt, dass bei Anlage des Anschlagkörpers 38 an der Anschlagplatte 36 das Endteil 30 des Etiketts 26 über die Öffnung 22 des Aufnahmekanals 24 vorsteht und manuell ergriffen werden kann, während der Hauptteil 28 als Aufzeichnungsbereich vollständig geschützt ins Innere der Schutzhülle 20 eingezogen ist.

Die Anschlagplatte 36 kann als internes und geschütztes zweites Etikett benutzt und mit den entsprechenden Informationen beschriftet werden. Während vorstehend als Einrichtung zum Erzeugen der Vorspannkraft für die Einziehbewegung des Etiketts 26 ein flaches Gummiband 32 gezeigt ist, versteht es sich, dass Einrichtungen anderer Art benutzt werden könnten, beispielsweise anders geformte elastische oder gummielastische Mittel, beispielsweise auch in Form von Federanordnungen.

## Patentansprüche

1. Zug- oder Spannmittel, insbesondere einen Zurrgurt (2), mit einem flachen, langgestreckten Gurtkörper (3) und einem Etikett (26), das zumindest solche visuell erkennbaren Informationen enthält, deren Angabe gesetzlich vorgeschrieben ist, wobei für das lageveränderlich angeordnete Etikett (26) eine Schutzhülle (20) vorhanden ist, die zumindest einen Großteil (28) des Etiketts unter Einfluss einer an ihm angreifenden Vorspannkraft (32) in einer geschützten Ruheposition aufnimmt, aus der es gegen die Vorspannkraft (32) in eine Ableseposition herausbewegbar ist, **dadurch gekennzeichnet, dass** eine Anschlageinrichtung (36, 38) vorgesehen ist, die die Weglänge der Einziehbewegung des Etiketts (26) in einen Aufnahmekanal (24) derart begrenzt, dass bei der geschützten Ruheposition ein Endteil (30) des Etiketts (26) außerhalb einer Öffnung (22) des Aufnahmekanals (24) verbleibt.

2. Zug- oder Spannmittel nach Anspruch 1, **dadurch gekennzeichnet, dass** die Schutzhülle (20) zwischen Lagen (10, 12) des Gurtkörpers (8) gebildet ist, die in einem sich an eine Endschlaufe (6) anschließenden Längenabschnitt aneinanderliegend sind.

3. Zug- oder Spannmittel nach Anspruch 2, **dadurch gekennzeichnet, dass** der Gurtkörper (8) ein Kunststoffgewebeband, beispielsweise ein Polyester-Gewebe, ist und dass die aneinanderliegenden Lagen (10, 12) entlang beider Seitenränder (14, 16) miteinander verbunden, vorzugsweise vernäht sind, dergestalt, dass die so gebildete Schutzhülle (20) zwischen den Verbindungsbereichen den sich in Längsrichtung erstreckenden Aufnahmekanal (24) mit der am Ende des Aneinanderliegens der Lagen (10, 12) gebildeten Öffnung (22) aufweist.

4. Zug- oder Spannmittel nach einem der vorstehenden Ansprüche, **dadurch gekennzeichnet, dass** das Etikett (26) ein flaches, flexibles Kunststoffband ist, an dessen einem Ende ein im Aufnahmekanal (24) verankertes, die Vorspannkraft erzeugendes Gummiband (32) angreift, das das sich durch die Öffnung (22) des Aufnahmekanals (24) erstreckende Etikett (26) in den Aufnahmekanal (24) einzuziehen sucht.

5. Zug- oder Spannmittel nach Anspruch 4, **dadurch gekennzeichnet, dass** die Anschlageinrichtung eine im Aufnahmekanal (24) festgelegte, flache Anschlagplatte (36) aufweist, die das sich im Aufnahmekanal (24) in Längsrichtung erstreckende Gummiband (32) übergreift, das an seinem vom Etikett (26) entfernten Endbereich (34) am Gurtkörper (8) festgelegt ist und in seinem dehnbaren Längenbereich unterhalb der Anschlagplatte (36) bewegbar ist.

6. Zug- oder Spannmittel nach Anspruch 4 oder 5, **dadurch gekennzeichnet, dass** das Gummiband (32) an seinem mit dem Etikett (26) verbundenen Endbereich einen aus der Bandebene vorstehenden Anschlagkörper (38) bildet, der durch Anlage an der Anschlagplatte (36) die Einziehbewegung des Etiketts (26) bei Erreichen der Ruheposition begrenzt.

7. Zug- oder Spannmittel nach Anspruch 5, **dadurch gekennzeichnet, dass** die Anschlagplatte (36) als zweites, im Aufnahmekanal (24) befindliches Etikett ausgebildet ist.

## Claims

1. Traction or tensioning means, in particular a lashing strap (2), comprising a flat, elongate strap body (3) and a label (26) that contains at least such visually recognisable information as is required by law to be declared, a protective sleeve (20) being provided for the label (26) which can be moved into different positions, said sleeve receiving at least a major part (28) of the label in a protected position of rest under the influence of a biasing force (32) acting on the label, which can be moved out of the position of rest against the biasing force (32) into a position in which the label can be read, **characterised in that** a stop device (36, 38) is provided that limits the path length of the movement involved when drawing the label (26) into a receiving channel (24) such that in the protected position of rest an end part (30) of the label (26) remains outside of an opening (22) of the receiving channel (24).

2. Traction or tensioning means according to Claim 1, **characterised in that** the protective sleeve (20) is formed between layers (10, 12) of the strap body (8) which lie on top of one another in a longitudinal section adjacent to an end loop (6).

3. Traction or tensioning means according to Claim 2, **characterised in that** the strap body (8) is a synthetic fabric strip, for example a polyester fabric, and that the layers (10, 12) lying on top of one another are connected, preferably stitched, to one another along both side edges (14, 16) so that the protective sleeve (20) that is thus formed has between the connection regions the receiving channel (24) extending in the longitudinal direction with the opening (22) formed at the end of the layers (10, 12) lying on top of one another.

4. Traction or tensioning means according to any of the preceding claims, **characterised in that** the label (26) is a flat, flexible synthetic strip on one end of which a rubber strip (32) anchored in the receiving channel (24) and generating the biasing force acts, which rubber strip seeks to draw the label (26) extending through the opening (22) of the receiving channel (24) into the receiving channel (24).

5. Traction or tensioning means according to Claim 4, **characterised in that** the stop device has a flat stop plate (36) secured within the receiving channel (24), which stop plate engages over the rubber strip (32) extending within the receiving channel (24) in the longitudinal direction, which rubber strip is secured to the strap body (8) at its end region (34) away from the label (26) and can be moved in its extendable longitudinal region beneath the stop plate (36).

6. Traction or tensioning means according to Claim 4 or 5, **characterised in that** the rubber strip (32) forms on its end region connected to the label (26) a stop body (38) projecting out of the plane of the strip that limits the drawing-in movement of the label (26) upon reaching the position of rest by striking the stop plate (36).

7. The traction or tensioning means according to Claim 5, **characterised in that** the stop plate (36) is in the form of a second label located within the receiving channel (24).

## Revendications

1. Moyen de traction ou de tension, notamment sangle (2) d'amarrage, ayant un corps (3) de sangle plat s'étendant en longueur et une étiquette (26) qui contient au moins des informations déchiffrables visuellement, dont les indications sont prescrites légalement, dans lequel il y a pour l'étiquette (26), disposée de manière à ce que la position puisse être modifiée, une gaine (20) de protection qui reçoit, en une position de repos protégée, au moins une grande partie (28) de l'étiquette sous l'influence d'une force (32) de précontrainte s'y appliquant, position de repos de laquelle elle peut être, à l'encontre de la force (32) de précontrainte, mise dans une position de lecture, **caractérisé en ce qu'**il est prévu un dispositif (36, 38) de butée, qui limite la longueur de trajet du mouvement d'insertion de l'étiquette (26) dans un canal (24) de réception de manière à ce qu'en la position de repos protégée, une partie (30) d'extrémité de l'étiquette (26) reste à l'extérieur d'une ouverture (22) du canal (24) de réception.

2. Moyen de traction ou de tension suivant la revendication 1, **caractérisé en ce que** la gaine (20) de protection est formée entre des couches (10, 12) du corps (8) de la sangle, qui sont mises, les unes à côté des autres, en un tronçon longitudinal se raccordant à une boucle (6) d'extrémité.

3. Moyen de traction ou de tension suivant la revendication 2, **caractérisé en ce que** lé corps (8) de la sangle est un ruban de tissu en matière plastique, par exemple un tissu en polyester, et **en ce que** les couches (10, 12) se trouvant l'une à côté de l'autre, sont reliées entre elles le long de deux bords (14, 16) latéraux en étant de préférence cousues de manière à ce que la gaine (20) de protection ainsi formée ait, entre les parties de liaison, le canal (24) de réception s'étendant dans une direction longitudinale et ayant l'ouverture (22) formée à l'extrémité de la juxtaposition des couches (10, 12).

4. Moyen de traction ou de tension suivant l'une des précédentes revendications, **caractérisé en ce que** l'étiquette (26) est un ruban de matière plastique souple, plat, à l'une des extrémités duquel attaque un ruban (32) en caoutchouc ancré dans le canal (24) de réception, produisant la force de précontrainte et tendant à introduire dans le canal (24) de réception l'étiquette (26) s'étendant dans l'ouverture (22) du canal (24) de réception.

5. Moyen de traction ou de tension suivant la revendication 4, **caractérisé en ce que** le dispositif de butée a une plaque (36) de butée plane, fixée dans le canal (24) de réception, recouvrant le ruban (32) en caoutchouc s'étendant dans la direction longitudinale dans le canal (24) de réception, lequel ruban est à sa partie (34) d'extrémité éloignée de l'étiquette (26) fixé au corps (8) de la sangle et peut, dans sa partie longitudinale extensible, venir en dessous de la plaque (36) de butée.

6. Moyen de traction ou de tension suivant la revendication 4 ou 5, **caractérisé en ce que** le ruban (32) en caoutchouc forme, à sa partie d'extrémité reliée à l'étiquette (26), un corps (38) de butée en saillie du plan du ruban, corps qui, par contact avec la plaque (36) de butée, limite le mouvement d'introduction de l'étiquette (26) lorsque la position de repos est atteinte.

7. Moyen de traction ou de tension suivant la revendication 5, **caractérisé en ce que** la plaque (36) de butée est constituée sous la forme d'une deuxième étiquette se trouvant dans le canal (24) de réception.
